# EUROPÄISCHE PATENTSCHRIFT

(11) **EP 2 145 512 B1**
(45) Veröffentlichungstag und Bekanntmachung des Hinweises auf die Patenterteilung: **10.07.2013**
(21) Anmeldenummer: 07728984.1
(22) Anmeldetag: 10.05.2007
(51) Int. Cl.: H05B 41/282, H02M 1/36

(54) **SCHALTUNGSANORDNUNG UND VERFAHREN ZUM BETREIBEN MINDESTENS EINER ENTLADUNGSLAMPE**
CIRCUIT ARRANGEMENT AND METHOD FOR THE OPERATION OF AT LEAST ONE DISCHARGE LAMP
CIRCUIT ET PROCÉDÉ PERMETTANT DE FAIRE FONCTIONNER AU MOINS UNE LAMPE À DÉCHARGE

(43) Veröffentlichungstag der Anmeldung: 20.01.2010
(73) Patentinhaber: OSRAM GmbH, 80807 München (DE)
(72) Erfinder: KLIER, Jürgen, 83301 Traunreut (DE)
(86) Internationale Anmeldenummer: PCT/EP2007/054532
(87) Internationale Veröffentlichungsnummer: WO 2008/138391

(56) Entgegenhaltungen:
- EP-A- 0 779 768
- EP-A- 1 231 821
- DE-A1- 10 147 311
- DE-A1- 10 162 048
- DE-A1-102005 041 076
- US-A- 5 883 473
- US-A1- 2003 198 066

## Beschreibung

### Technisches Gebiet

Die vorliegende Erfindung betrifft eine Schaltungsanordnung zum Betreiben mindestens einer Entladungslampe mit einem Eingang zum Anschließen einer Versorgungswechselspannung, einem Gleichrichter, der mit dem Eingang gekoppelt ist und einen ersten und einen zweiten Ausgangsanschluss zum Bereitstellen einer Versorgungsgleichspannung aufweist, einem Wechselrichter, der zumindest einen ersten und einen zweiten Schalter umfasst, die seriell zwischen den ersten und den zweiten Ausgangsanschluss des Gleichrichters gekoppelt sind, einer Steuerschaltung, die zumindest ausgelegt ist, den ersten und den zweiten Schalter anzusteuern, mit einem ersten Eingang zum Empfang eines Steuersignals, und einem zweiten Eingang zur Zuführung einer Spannung zur Versorgung der Steuerschaltung, wobei der zweite Eingang mit einer Betriebsversorgungsvorrichtung verbunden ist, die ausgelegt ist, im Betrieb des wechselrichters eine Betriebsversorgungsspannung an den zweiten Eingang der Steuerschaltung zu koppeln, und einer Steuerleitung, die einerseits mit dem Eingang zum Anschließen einer versorgungswechselspannung und andererseits mit dem ersten Eingang zum Empfang eines Steuersignals gekoppelt ist, wobei in der Steuerleitung ein dritter Schalter angeordnet ist. Sie betrifft überdies ein Verfahren zum Betreiben mindestens einer Entladungslampe an einer derartigen Schaltungsanordnung.

### Stand der Technik

In der Schrift DE 10 2005 041 076 A1 ist eine Schaltungsanordnung zum Betrieb einer elektrischen Lampe offenbart, bei der eine Start-Stromversorgung einer Steuerschaltung über einen Transistor geführt wird, der zum Start der Steuerschaltung eingeschaltet wird.

Schaltungsanordnungen, insbesondere elektronische Vorschaltgeräte, die über einen Steuereingang ein- und ausgeschaltet werden, haben im ausgeschalteten Zustand eine Leistungsaufnahme von bis zu 1 w, die so genannten Stand-By-Verluste. Ursache für diese Verluste ist vor allem die interne Steuerschaltung, die auch im "Aus"-zustand mit Spannung versorgt werden muss, um auf den nächsten "Ein"-Befehl reagieren zu können. Die durch die interne Steuerschaltung verursachten Verluste machen etwa 60 % der Stand-By-Verluste aus. 30 % der Stand-By-Verluste werden durch die Wendelüberwachung erzeugt, 10 % der Verluste durch das Schaltnetzteil.

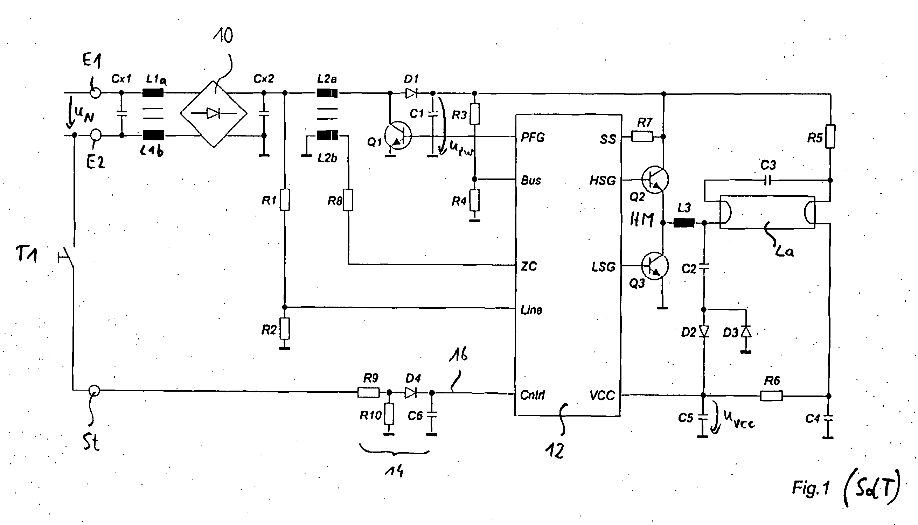

Zur detaillierteren Darlegung der der Erfindung zugrunde liegenden Problematik wird zunächst auf Fig. 1 Bezug genommen, die eine gattungsgemäße, aus dem Stand der Technik bekannte Schaltungsanordnung zeigt. Diese weist einen Eingang E1, E2 zum Anschließen einer versorgungswechselspannung U_{N} auf. Daran schließen sich ein erster X-Kondensator Cx1, zwei miteinander gekoppelte Induktivitäten L1a, L1b, ein Gleichrichter 10 sowie ein zweiter X-Kondensator Cx2 an. Eine Entladungslampe La ist über eine Induktivität L3 mit dem Halbbrückenmittelpunkt HM eines Wechselrichters verbunden, der einen ersten Q2 und einen zweiten Schalter Q3 umfasst. Parallel zur Lampe La ist ein Kondensator C3 angeordnet. Die Schaltungsanordnung umfasst eine Steuerschaltung 12, die vorliegend verschiedene Aufgaben löst. Zum einen wird der erste Schalter Q2 des Wechselrichters über einen Steuerausgang HSG der Steuerschaltung 12, der Schalter Q3 des Wechselrichters über einen Steuerausgang LSG der Steuerschaltung 12 ange steuert. Zur Messung der Netzspannung dient ein Eingang Line, der die Spannung, die an einem ohmschen Widerstand R2 eines Spannungsteilers, der die ohmschen Widerstände R1 und R2 umfasst, auswertet. Der Widerstand R1 ist mit der am Kondensator Cx2 bereitgestellten Spannung gekoppelt. Unter Verwendung der miteinander gekoppelten Induktivitäten L2a, L2b sowie des ohmschen Widerstands R8 wird über einen Eingang ZC ein Nulldurchgang des Stroms durch die Induktivität L2a festgestellt, um ein Schaltnetzteil, das einen Transistor Q1, eine Diode D1, die Induktivitäten L2a, L2b, einen ohmschen Widerstand R8 sowie einen Kondensator C1 umfasst, über einen Ausgang PFG geeignet anzusteuern. Dabei bilden der Transistor Q1, die Diode D1 und der Kondensator C1 eine PFC (power factor correction)-Vorrichtung. Unter Verwendung der ohmschen Widerstände R3 und R4, die zusammen einen Spannungsteiler bilden, wird über einen Eingang Bus die Amplitude der so genannten Zwischenkreisspannung U_{ZW} gemessen. Über eine Pulsformervorrichtung 14, die die ohmschen Widerstände R9 und R10 sowie eine Diode D4 und einen Kondensator C6 umfasst, wird das von einem Taster T1, der vorliegend mit dem Eingang E2 gekoppelt ist, gelieferte Tastsignal in einen Puls umgewandelt, der über den Abschnitt 16 einer Steuerleitung St an den Eingang Cntrl der Steuerschaltung 12 gekoppelt ist. Über einen ohmschen Widerstand R7, der mit der Zwischenkreisspannung U_{ZW} gekoppelt ist, wird die Steuerschaltung 12 nach Empfang eines Aus-Signals am Cntrl-Eingang weiterhin über den Eingang SS mit Spannung versorgt, um für den nächsten Ein-Befehl am Cntrl-Eingang empfangsbereit zu sein. Im Betrieb der Entladungslampe La wird die Steuerschaltung 12 über eine Betriebsversorgungsvorrichtung mit Spannung versorgt, wobei die Betriebsversorgungsvorrichtung den Kondensator C2, die Dioden D2 und D3 sowie den Kondensator C5 umfasst. Dabei wird die Spannung U_{VCC} am Kondensator C5 bereitgestellt, der mit dem Eingang VCC der Steuerschaltung 12 gekoppelt ist. Dieser Eingang VCC dient weiterhin dazu unter Verwendung der ohmschen Widerstände R5 und R6 sowie des Kondensators C4 festzustellen, ob eine Entladungslampe La eingesetzt ist.

Zur Funktion: Die in Fig. 1 dargestellte Schaltungsanordnung ist Teil eines elektronischen Vorschaltgeräts, das über einen Taster T1 ein- und ausgeschaltet werden kann. Dabei liegt auch im Aus-Zustand die Netzspannung U_{N} an der Schaltungsanordnung an. Es wird lediglich die interne Steuerschaltung 12 angehalten, so dass der PFC-Transistor Q1 und der Wechselrichter, der die Schalter Q2 und Q3 umfasst, nicht mehr angesteuert werden. Die interne Steuerschaltung 12 muss über den ohmschen Widerstand R7 weiterhin mit Spannung versorgt werden, um für den nächsten Ein-Befehl empfangsbereit zu sein. Die interne Steuerschaltung 12 verursacht dabei zusammen mit ihrer Versorgung über den ohmschen Widerstand R7 den größten Teil der Stand-By-Verluste.

Darüber hinaus erhöhen mehrere Strompfade, die die Messwerte für verschiedene Funktionen des elektronischen Vorschaltgeräts liefern, die Stand-By-Verluste: Hervorzuheben ist die Wendelüberwachung, die die zwei ohmschen Widerstände R5 und R6 umfasst, die in Reihe zu einer Elektrode der Leuchtstofflampe La geschaltet sind und nur bei eingesetzter Leuchtstofflampe La einen Strom vom so genannten Zwischenkreis, d. h. die Leitung der Schaltungsanordnung, an der die Zwischenkreisspannung U_{ZW} bereitgestellt wird, zur internen Steuerschaltung 12 fließen lassen. Die Wendelüberwachung sorgt dafür, dass das elektronische Vorschaltgerät nur bei eingesetzter Leuchtstofflampe La starten kann, dass das nach einem erkannten Lampenfehler automatisch abgeschaltete elektronische Vorschaltgerät abgeschaltet bleibt (shut down) und dass das EVG nach dem Austausch einer defekten Leuchtstofflampe automatisch wieder startet (relamping).

Das Schaltnetzteil, das die Induktivitäten L2a und L2b, den ohmschen Widerstand R8 sowie die PFC-Vorrichtung, die den Transistor Q1, die Diode D1 sowie den Kondensator C1 aufweist, umfasst, wird so gesteuert, dass die Zwischenkreisspannung U_{ZW} lastunabhängig auf einem konstanten Wert gehalten wird und dass der aufgenommene Netzstrom sinusförmig ist. Hierzu wird ein Steuersignal verwendet, das proportional zum Produkt aus der Regelabweichung der Zwischenkreisspannung U_{ZW} und aktuellem Wert der Netzspannung U_{N} ist. Dazu wird die Netzspannung U_{N} über die ohmschen Widerstände R1 und R2 sowie die Zwischenkreisspannung U_{ZW} über die ohmschen Widerstände R3 und R4 von der internen Steuerschaltung 12 abgefragt.

### Darstellung der Erfindung

Die Aufgabe der vorliegenden Erfindung besteht nun darin, eine gattungsgemäße Schaltungsanordnung derart weiterzubilden, dass sie reduzierte Stand-By-Verluste aufweist.

Diese Aufgabe wird gelöst durch eine Schaltungsanordnung mit den Merkmalen von Patentanspruch 1 sowie durch ein Verfahren mit den Merkmalen von Patentanspruch 10.

Der vorliegenden Erfindung liegt die Erkenntnis zugrunde, dass sich die obenbenannte Aufgabe bei einer gattungsgemäßen Schaltungsanordnung lösen lässt, wenn das Aus-Signal auf der Steuerleitung verwendet wird, um das elektronische Vorschaltgerät einschließlich interner Steuerschaltung komplett abzuschalten. Das durch den nächsten Tastendruck am Taster T1 ausgelöste "Ein"-Signal dient nicht nur als Steuersignal "ein", sondern gleichzeitig zur Versorgung der internen Steuerschaltung bis das elektronische Vorschaltgerät angeschwungen ist und die Versorgung der internen Steuerschaltung über die bekannte Betriebsversorgungsvorrichtung wieder funktioniert.

Demnach umfasst eine erfindungsgemäße Schaltungsanordnung weiterhin eine Anlaufversorgungsvorrichtung mit einem Eingang und einem Ausgang, wobei ihr Eingang mit dem ersten Eingang der Steuerschaltung und ihr Ausgang mit dem zweiten Eingang der Steuerschaltung gekoppelt ist, wobei die Anlaufversorgungsvorrichtung ausgelegt ist, bei unversorgter und damit ausgeschalteter Steuerschaltung auf ein Ein-Signal am Eingang der Anlaufversorgungsvorrichtung eine Anlaufversorgungsspannung am Ausgang der Anlaufversorgungsvorrichtung bereitzustellen.

Durch diese Maßnahme kann die Steuerschaltung bis zum Empfang eines erneuten Ein-Signals komplett abgeschaltet sein, d. h. eine Versorgung wie im Stand der Technik über den Widerstand R7 entfällt in dieser Phase. Damit verursacht die Steuerschaltung während eines Stand-Bys keinerlei Stand-By-Verluste.

Bei einer bevorzugten Ausführungsform umfasst die Betriebsversorgungsvorrichtung einen ersten Kondensator, der mit dem zweiten Eingang der Steuerschaltung gekoppelt ist, wobei die Anlaufversorgungsvorrichtung ausgelegt ist, das Ein-Signal an ihrem Eingang als Anlaufversorgungsspannung an den ersten Kondensator zu koppeln, um diesen zu laden. Damit wird für die Anlaufversorgung der gleiche Kondensator und der gleiche Eingang der Steuerschaltung verwendet wie für die Betriebsversorgung, was in einer äußerst günstigen Realisierung resultiert.

Bevorzugt umfasst die Schaltungsanordnung einen zweiten Kondensator, der zwischen die Versorgungsgleichspannung und einen ersten Anschluss für die Entladungslampe gekoppelt ist und einen dritten Kondensator, der zwischen den zweiten Anschluss für die Entladungslampe und das Bezugspotential gekoppelt ist, wobei die Anlaufversorgungsvorrichtung ausgelegt ist, den nach Einsetzen einer Entladungslampe auftretenden Ladestrom des dritten Kondensators in einen Spannungsimpuls zu wandeln und diesen Spannungsimpuls am Ausgang der Anlaufversorgungsvorrichtung bereitzustellen. Damit wird die Relamping-Funktion ermöglicht, d. h. nach Einsetzen einer Lampe wird am Eingang VCC der Steuerschaltung ein Spannungsimpuls bereitgestellt, der zum Anlaufen der Steuerschaltung ausreichend ist. Durch die Kopplung des ersten Eingangs der Steuerschaltung mit dem zweiten Eingang der Steuerschaltung über die Anlaufversorgungsvorrichtung kann damit der Ladestrom des dritten Kondensators auch an den ersten Eingang der Steuerschaltung angelegt werden, um damit ein Ein-Signal an die Steuerschaltung bereitzustellen. Dadurch dient der Ladestrom des dritten Kondensators beim Relamping einerseits zur Bereitstellung einer Vorsorgungsspannung für die Steuerschaltung, andererseits als Ein-Signal für die Steuerschaltung.

Besonders bevorzugt weist dabei die Schaltungsanordnung weiterhin eine Ladestromverstärkungsvorrichtung auf, die ausgelegt ist, den Ladestrom des dritten Kondensators zu verstärken, wobei die Ladestromverstärkungsvorrichtung zwischen die Versorgungsgleichspannung und das Bezugspotential gekoppelt ist. Durch die Dimensionierung der Ladestromverstärkungsvorrichtung kann demnach sichergestellt werden, dass der Ladestrom des dritten Kondensators auch beim Relamping immer ausreicht, um die interne Steuerschaltung mit ausreichend Spannung zu versorgen.

Bevorzugt ist dem dritten Kondensator ein ohmscher Widerstand parallel geschaltet. Diese Maßnahme sorgt für eine schnelle Entladung des dritten Kondensators bei entfernter Lampe.

Es ist weiterhin bevorzugt, dass die Anlaufversorgungsvorrichtung eine Koppelvorrichtung umfasst, die derart angeordnet ist, dass der zweite Eingang der Steuerschaltung über die Koppelvorrichtung an die Versorgungsgleichspannung koppelbar ist, wobei die Koppelvorrichtung einen Steuereingang aufweist, der mit dem Eingang der Anlaufversorgungsvorrichtung gekoppelt ist. Damit wird die Versorgungsgleichspannung erst dann zur Versorgung der Steuerschaltung "angezapft", wenn am Eingang der Anlaufversorgungsvorrichtung ein Ein-Signal empfangen wurde. Bei einer besonders bevorzugten Ausführungsform umfasst dabei die Koppelvorrichtung einen vierten und einen fünften Schalter und mindestens einen ohmschen Widerstand, die derart angeordnet sind, dass durch Ansteuerung des vierten Schalters mit dem Signal am Eingang der Anlaufversorgungsvorrichtung ein Stromfluss durch den ohmschen Widerstand ermöglicht wird, wobei der dadurch am ohmschen Widerstand erzeugte Spannungsabfall an die Steuerstrecke des fünften Schalters gekoppelt wird, um den fünften Schalter leitend zu schalten, wodurch der fünfte Schalter, der mit der Versorgungsgleichspannung gekoppelt ist, die Versorgungsgleichspannung an den Ausgang der Anlaufversorgungsvorrichtung anlegt.

Bevorzugt ist dabei der erste Eingang der Steuerschaltung durch die Steuerschaltung hindurch mit dem Eingang der Anlaufversorgungsvorrichtung gekoppelt. Dabei können Halteglieder vorgesehen sein, um ein impulsförmiges Ein-Signal am ersten Eingang der Steuerschaltung als dauerhaftes Ein-Signal Eingang der Anlaufversorgungsvorrichtung bereitzustellen. Dadurch wird im Betrieb der Entladungslampe die Wendelüberwachung aktiviert.

Bevorzugt ist der dritte Schalter als Taster ausgebildet. Ohne eine Betätigung des dritten Schalters wird ein Anlaufen der Steuerschaltung beim so genannten Relamping durch Einsetzen einer Entladungslampe erzeugt.

Weitere vorteilhafte Ausführungsformen ergeben sich aus den Unteransprüchen.

Die mit Bezug auf eine erfindungsgemäße Schaltungsanordnung vorgestellten bevorzugten Ausführungsformen und deren Vorteile gelten entsprechend, soweit anwendbar, für das erfindungsgemäße Verfahren.

### Kurze Beschreibung der Zeichnung(en)

Nachfolgend werden nunmehr drei Ausführungsbeispiele einer erfindungsgemäßen Schaltungsanordnung unter Bezugnahme auf die beigefügten Zeichnungen näher beschrieben. Es zeigen:
- Fig. 1: in schematischer Darstellung eine aus dem Stand der Technik bekannte Schaltungsanordnung zum Betreiben mindestens einer Entladungslampe;
- Fig. 2: in schematischer Darstellung ein erstes Ausführungsbeispiel einer erfindungsgemäßen Schaltungsanordnung;
- Fig. 3: in schematischer Darstellung ein zweites Ausführungsbeispiel einer erfindungsgemäßen Schaltungsanordnung; und
- Fig. 4: in schematischer Darstellung ein drittes Ausführungsbeispiel einer erfindungsgemäßen Schaltungsanordnung.

### Bevorzugte Ausführung der Erfindung

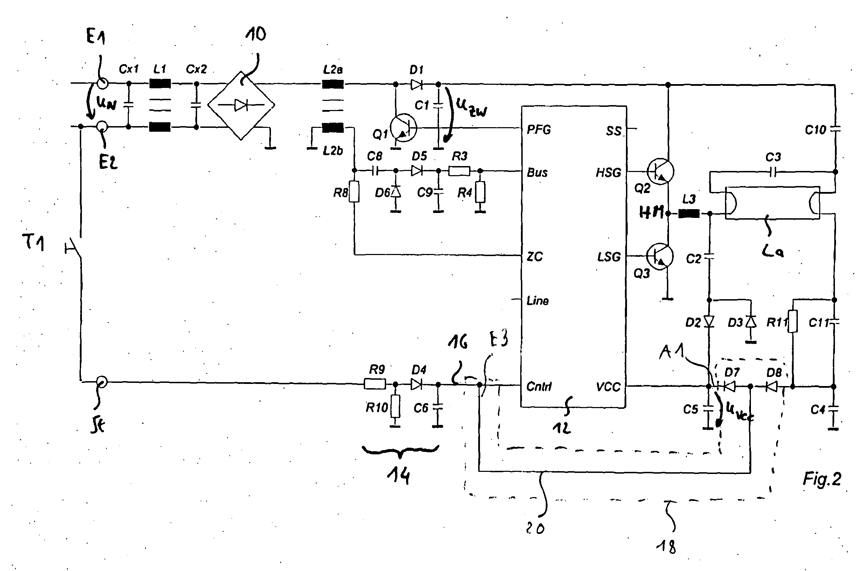

Die mit Bezug auf Fig. 1 eingeführten Bauelemente und deren Bezugszeichen gelten, soweit sie gleiche und ähnliche Bauelemente betreffen, auch für die in den Fig. 2 bis 4 dargestellten Ausführungsbeispiele erfindungsgemäßer Schaltungsanordnungen. Sie werden deshalb nicht nochmals eingeführt, so dass bei der nachfolgenden Beschreibung im Wesentlichen auf die Unterschiede zum in Fig. 1 dargestellten Stand der Technik eingegangen wird.

Das in Fig. 2 schematisch dargestellte erste Ausführungsbeispiel einer erfindungemäßen Schaltungsanordnung weist eine Anlaufversorgungsvorrichtung 18 auf, die einen Eingang E3 und einen Ausgang A1 aufweist. Der Eingang E3 ist mit dem ersten Eingang Cntrl der Steuerschaltung 12 gekoppelt, der Ausgang A1 mit dem zweiten Eingang VCC der Steuerschaltung 12. Die Anlaufversorgungsvorrichtung 18 umfasst eine Leitung 20, die ausgelegt ist, ein Ein-Signal auf der Steuerleitung 16 zur Ladung des Kondensators C5 und damit zur Bereitstellung einer Anlaufversorgungsspannung am Eingang VCC der Steuerschaltung 12 zu erzeugen. Dazu umfasst die Anlaufvorsorgungsvorrichtung 18 weiterhin zwei Dioden D7 und D8.

Wenngleich in Fig. 2 eine Ausführungsform mit einem Taster T1 dargestellt ist, mit der die Netzspannung U_{N} auf den Steuereingang Cntrl der Steuerschaltung 12 geschaltet werden kann, ist die vorliegende Erfindung bei allen Steuerverfahren anwendbar, die mit nicht-potentialfreien Steuersignalen arbeiten. In dem gezeigten Ausführungsbeispiel führt ein kurzer Druck auf den Taster T1 zum Ein- und Ausschalten des elektronischen Vorschaltgeräts (EVG), in dem eine erfindungsgemäße Schaltungsanordnung realisiert ist, und ein langer Tastendruck dient abwechselnd zur Veränderung der Dimmstellung nach oben oder nach unten.

Die interne Steuerschaltung 12 wird vorliegend nur dann mit Spannung versorgt, so lange das elektronische Vorschaltgerät in Betrieb ist. Zur Betriebsversorgung dient vorliegend eine Ladungspumpe, die den Kondensator C2 sowie die Dioden D2 und D3 umfasst. Diese Betriebsversorgung bezieht ihre Leistung aus einem EVG-internen Wechselspannungssignal, z. B. aus der Lampenspannung. Ein Aus-Signal am Steuereingang St, erzeugt durch einen Druck auf den Taster T1, hält die Steuerschaltung 12 und damit die erfindungsgemäße Schaltungsanordnung an. Die Steuerschaltung 12 hat dann keine Versorgung mehr. Der nächste Tastendruck am Taster T1 wird einerseits als Ein-Signal am Eingang Cntrl der Steuerschaltung 12 interpretiert, wird andererseits über die Diode D7 zur Ladung des Kondensators C5 verwendet. Damit wird die Steuerschaltung 12 gestartet und so lange aus dem Kondensator C5 mit Spannung versorgt, bis die erfindungsgemäße Schaltungsanordnung angelaufen ist und die Betriebsversorgung über die Ladungspumpe C2, D2, D3 wieder funktioniert.

Die Speicherung des shut down nach einem erkannten Lampendefekt ist bei einer erfindungsgemäßen Schaltungsanordnung nicht erforderlich, da die Schaltungsanordnung nicht selbstständig, sondern erst nach einem Ein-Signal vom Taster T1 wieder anläuft.

Wenn beim Relamping eine neue Lampe La eingesetzt wird, erzeugt der Ladestrom des Kondensators C11 einen Spannungsimpuls an C4, der über die Dioden D7 und D8 den Kondensator C5 lädt und damit die Steuerschaltung 12 so lange mit Spannung versorgt, bis die Schaltungsanordnung angelaufen ist und die Betriebsversorgung über die Ladungspumpe C2, D2, D3 wieder funktioniert. Gleichzeitig dient dieser Spannungsimpuls über die Diode D8 und die Leitung 20 als Ein-Signal am Eingang Cntrl der Steuerschaltung 12. Der dem Kondensator C11 parallel geschaltete Widerstand R11 sorgt für eine schnelle Entladung des Kondensators C11 bei entfernter Lampe La. Dies dient einer schnellen Herstellung der Startbedingungen nach dem Replamping.

Damit entfällt die Wendelüberwachung, wie sie mit Bezug auf Fig. 1 beschrieben wurde. Die Stand-By-Verluste, die sich im Stand der Technik durch die Wendelüberwachung ergeben haben, fallen demnach bei einer erfindungsgemäßen Schaltungsanordnung gemäß Fig. 2 ebenfalls nicht an.

Eine weitere Reduktion der Stand-By-Verluste kann durch Modifikation des Schaltnetzteils erreicht werden. Dieses kann auf die Messung der Netzspannung wie sie bei der Schaltungsanordnung von Fig. 1 unter Verwendung der Widerstände R1 und R2 vorgenommen wurde, verzichten, wenn die Einschaltzeit des Transistors Q1 der PFC-Vorrichtung nur von der Regelabweichung der Zwischenkreisspannung U_{ZW} abhängt und nicht mehr von der Netzspannung U_{N}. Um weiterhin eine sinusförmige Stromaufnahme zu erreichen, muss der X-Kondensator Cx2 dann jedoch vor dem Gleichrichter 10 angeschlossen sein.

Eine weitere Reduktion der Stand-By-Verluste ergibt sich, wenn die Zwischenkreisspannung U_{ZW} aus der Spitze-Spitze-Spannung an der Induktivität L2b, die den Stromnulldurchgang anzeigt, über den Spitze-Spitze-Gleichrichter, der die Bauelemente C8, D6, D5 umfasst, bestimmt wird. Damit braucht der Spannungsteiler R3, R4 nicht mehr an der Zwischenkreisspannung U_{ZW} angeschlossen sein und erzeugt daher keine Stand-By-Verluste mehr.

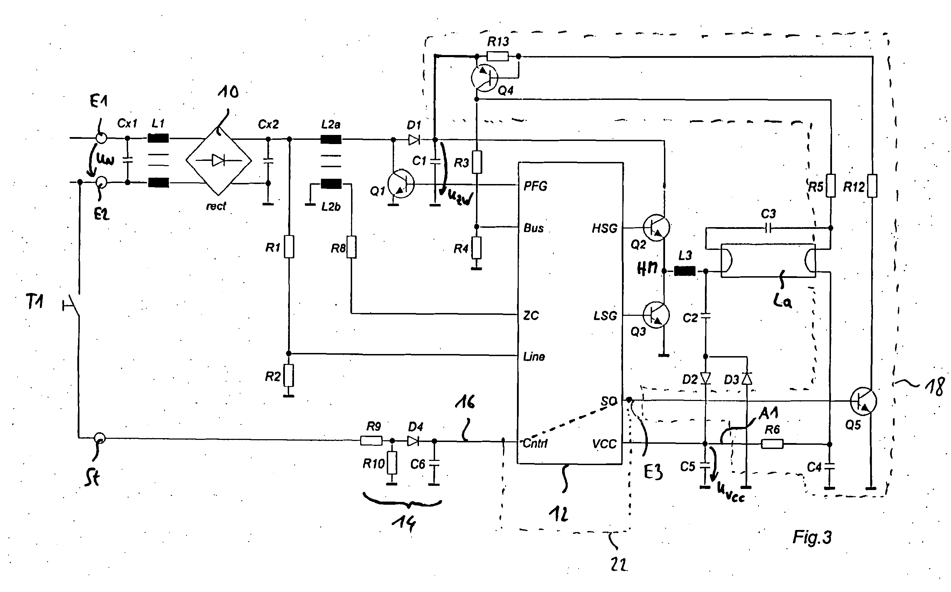

Ein zweites Ausführungsbeispiel einer erfindungsgemäßen Schaltungsanordnung ist schematisch in Fig. 3 dargestellt. In diesem Ausführungsbeispiel ist der Eingang Cntrl der Steuerschaltung 12 durch die Steuerschaltung 12 hindurch mit dem Ausgang S0 der Steuerschaltung 12 gekoppelt. Das am Ausgang S0 anliegende Signal wird an den Eingang E3 der Anlaufversorgungsvorrichtung 18 gekoppelt, wobei der Ausgang A1 der Anlaufversorgungsvorrichtung 18 wieder mit dem Kondensator C5 gekoppelt ist. Vorliegend umfasst die Anlaufversorgungsvorrichtung 18 eine Koppelvorrichtung, die einen Schalter Q4, einen Schalter Q5 sowie zwei ohmsche Widerstände R12 und R13 umfasst. Dabei ist der Eingang des Schalters Q5 mit dem Eingang E3 der Koppelvorrichtung 18 und damit mit dem Ausgang S0 der Steuerschaltung 12 gekoppelt. Wird der Schalter Q5 durch ein Ein-Signal am Ausgang S0 der Steuerschaltung 12 leitend geschaltet, so entsteht dadurch ein Stromfluss durch die ohmschen Widerstände R12 und R13. Der Spannungsabfall am ohmschen Widerstand R13 wird an die Steuerstrecke des Schalters Q4 angelegt, wodurch dieser leitend geschaltet wird und die Zwischenkreisspannung U_{ZW} über den Widerstand R5, eine Elektrode der Lampe La sowie den ohmschen Widerstand R6 an den Kondensator C5 führt, um diesen zu laden und damit eine Anlaufversorgungsspannung der Steuerschaltung 12 über deren Eingang VCC bereitzustellen. Die Messung der Zwischenkreisspannung U_{ZW} ist ebenfalls vom Schaltzustand des Schalters Q4 abhängig, so dass nur bei eingeschaltetem Schalter Q4 eine Messung der Zwischenkreisspannung über die Widerstände R3 und R4 erfolgt. Dadurch ergeben sich keine Stand-By-Verluste, im Gegensatz zur Anordnung zur Messung der Zwischenkreisspannung gemäß Fig. 1.

Anstelle der internen Weiterleitung des Signals am Eingang Cntrl der Steuerschaltung 12 an den Ausgang S0 der Steuerschaltung 12, kann dies ohne Weiteres durch eine externe Leitung 22 wie sie in Fig. 2 gestrichelt eingezeichnet ist, erreicht werden.

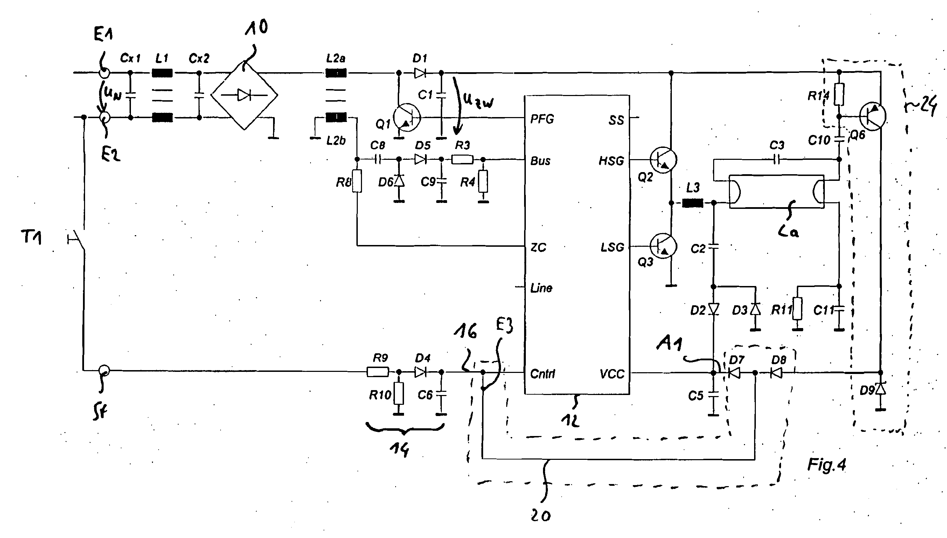

Bei der Ausführungsform gemäß Fig. 4 ist eine Ladestromverstärkungsvorrichtung 24 vorgesehen, die dazu dient, den Ladestrom des Kondensators C11 zu verstärken, falls dieser beim Relamping nicht ausreicht, um die interne Steuerschaltung 12 ausreichend mit Spannung zu versorgen. Dazu wird der Ladestrom über einen ohmschen Widerstand R14 geführt, der eine Spannung an die Steuerstrecke eines Schalters Q6 anlegt. Aufgrund des Spannungsabfalls am ohmschen Widerstand R14 wird der Schalter Q6 leitend geschaltet, so dass die Zwischenkreisspannung U_{ZW} über die Dioden D8 und D7 an den Kondensator C5 angelegt wird. Eine Zenerdiode D9 schützt dabei die interne Steuerschaltung 12 vor Überspannung.

## Patentansprüche

1. Schaltungsanordnung zum Betreiben mindestens einer Entladungslampe (La) mit:
- einem Eingang (E1, E2) zum Anschließen einer Versorgungswechselspannung (U_{N});
- einem Gleichrichter (10), der mit dem Eingang (E1, E2) gekoppelt ist und einen ersten und einen zweiten Ausgangsanschluss zum Bereitstellen einer versorgungsgleichspannung (U_{ZW}) aufweist;
- einem wechselrichter, der zumindest einen ersten (Q2) und einen zweiten Schalter (Q3) umfasst, die seriell zwischen den ersten und den zweiten Ausgangsanschluss des Gleichrichters (10) gekoppelt sind;
- einer Steuerschaltung (12), die zumindest ausgelegt ist, den ersten (Q2) und den zweiten Schalter (Q3) anzusteuern, mit
- einem ersten Eingang (Cntrl) zum Empfang eines Steuersignals (St), und
- einem zweiten Eingang (VCC) zur zuführung einer Spannung zur Versorgung der Steuerschaltung, wobei der zweite Eingang (VCC) mit einer Betriebsversorgungsvorrichtung (C2, D2, D3) der Schaltungsanordnung verbunden ist, die ausgelegt ist, im Betrieb des Wechselrichters (Q2, Q3) eine Betriebsversorgungsspannung an den zweiten Eingang (VCC) der Steuerschaltung zu koppeln;
- einer Steuerleitung (16), die einerseits mit dem Eingang (E1; E2) zum Anschließen einer versorgungswechselspannung (U_{N}) und andererseits mit dem ersten Eingang (Cntrl) zum Empfang eines Steuersignals gekoppelt ist, wobei in der Steuerleitung (16) ein dritter Schalter (T1) angeordnet ist;
**dadurch gekennzeichnet,**
**dass** sie "weiterhin eine Anlaufversorgungsvorrichtung (18) mit einem Eingang (E3) und einem Ausgang (A1) umfasst, wobei ihr Eingang (E3) mit dem ersten Eingang (Cntr1) der Steuerschaltung (12) und ihr Ausgang (A1) mit dem zweiten Eingang (VCC) der Steuerschaltung (12) gekoppelt ist;
wobei die Anlaufversorgungsvorrichtung (18) ausgelegt ist, bei unversorgter und damit ausgeschalteter Steuerschaltung (12) auf ein Ein-Signal am Eingang (E3) der Anlaufversorgungsvorrichtung (18) eine Anlaufversorgungsspannung (U_{VCC}) am Ausgang (A1) der Anlaufversorgungsvorrichtung (18) bereitzustellen.

2. Schaltungsanordnung nach Anspruch 1,
**dadurch gekennzeichnet,**
**dass** die Betriebsversorgungsvorrichtung einen ersten Kondensator (C5) umfasst, der mit dem zweiten Eingang (VCC) der Steuerschaltung (12) gekoppelt ist, wobei die Anlaufversorgungsvorrichtung (18) ausgelegt ist, das Ein-Signal an ihrem Eingang (E3) als Anlaufversorgungsspannung an den ersten Kondensator (C5) zu koppeln, um diesen zu laden.

3. Schaltungsanordnung nach einem der Ansprüche 1 oder 2,
**dadurch gekennzeichnet,**
**dass** die Schaltungsanordnung einen zweiten Kondensator (C10) umfasst, der zwischen die Versorgungsgleichspannung (U_{ZW}) und einen ersten Anschluss für die Entladungslampe (La) gekoppelt ist, und einen dritten Kondensator (C11), der zwischen den zweiten Anschluss für die Entladungslampe (La) und das Bezugapotential gekoppelt ist, wobei die Anlaufversorgungsvorrichtung (18) ausgelegt ist, den nach Einsetzen einer Entladungslampe (La) auftretenden Ladestrom des dritten Kondensators (C11) in einen Spannungsimpuls zu wandeln und diesen Spannungsimpuls am Ausgang (A1) der Anlaufversorgungsvorrichtung (18) bereitzustellen.

4. Schaltungsanordnung nach Anspruch 3,
**dadurch gekennzeichnet,**
**dass** die Schaltungsanordnung weiterhin eine Ladestromverstärkungsvorrichtung (24) aufweist, die ausgelegt ist, den Ladestrom des dritten Kondensators (C11) zu verstärken, wobei die Ladestromverstärkungsvorrichtung (24) zwischen die Versorgungsgleichspannung (U_{ZW}) und das Bezugspotential gekoppelt ist.

5. Schaltungsanordnung nach einem der Ansprüche 3 oder 4,
**dadurch gekennzeichnet,**
**dass** dem dritten Kondensator (C11) ein ohmscher Widerstand (R11) parallel geschaltet ist.

6. Schaltungsanordnung nach Anspruch 1,
**dadurch gekennzeichnet,**
**dass** die Anlaufversorgungsvorrichtung (18) eine Koppelvorrichtung (Q4, Q5, R12, R13) umfasst, die derart angeordnet ist, dass der zweite Eingang (VCC) der Steuerschaltung (12) über die Koppelvorrichtung (Q4, Q5, R12, R13) an die Versorgungsgleichspannung (U_{ZW}) koppelbar ist, wobei die Koppelvorrichtung (Q4, Q5, R12, R13) einen Steuereingang aufweist, der mit dem Eingang (E3) der Anlaufverssorgungsvorrichtung gekoppelt ist.

7. Schaltungsanordnung nach Anspruch 6,
**dadurch gekennzeichnet,**
**dass** die Koppelvorrichtung einen vierten und einen fünften Schalter (Q5, Q4) und mindestens einen ohmschen Widerstand (R13) umfasst, die derart angeordnet sind, dass durch Ansteuerung des vierten Schalters (Q5) mit dem Signal am Eingang (E3) der Anlaufversorgungsvorrichtung (18) ein Stromfluss durch den ohmschen Widerstand (R13) ermöglicht wird, wobei der dadurch am ohmschen Widerstand (R13) erzeugte Spannungsabfall an die Steuerstrecke des fünften Schalters (Q4) gekoppelt wird, um den fünften Schalter (Q4) leitend zu schalten, wodurch der fünfte Schalter (Q4), der mit der Versorgungsgleichspannung (U_{ZW}) gekoppelt ist, die versorgungsgleichspannung (U_{ZW}) an den Ausgang (A1) der Anlaufversorgungsvorrichtung (18) anlegt.

8. Schaltungsanordnung nach einem der Ansprüche 6 oder 7,
**dadurch gekennzeichnet,**
**dass** der erste Eingang (Cntrl) der Steuerschaltung (12) durch die Steuerschaltung hindurch mit dem Eingang (E3) der Anlaufversorgungsvorrichtung (18) gekoppelt ist.

9. Schaltungsanordnung nach einem der vorhergehenden Ansprüche,
**dadurch gekennzeichnet,**
**dass** der dritte Schalter als Taster (T1) ausgebildet ist.

10. verfahren zum Betreiben mindestens einer Entladungslampe (La) an einer Schaltungsanordnung mit einem Eingang (E1, E2) zum Anschließen einer Versorgungswechselspannung (U_{N}); einem Gleichrichter (10), der mit dem Eingang (E1, E2) gekoppelt ist und einen ersten und einen zweiten Ausgangsanschluss zum Bereitstellen einer Versorgungsgleichspannung (U_{ZW}) aufweist; einem Wechselrichter, der zumindest einen ersten (Q2) und einen zweiten Schalter (Q3) umfasst, die seriell zwischen den ersten und den zweiten Ausgangsanschluss des Gleichrichters (10) gekoppelt sind; einer Steuerschaltung (12), die zumindest ausgelegt ist, den ersten (Q2) und den zweiten Schalter (Q3) anzusteuern, wobei die Steuerschaltung aufweist einen ersten Eingang (Cntrl) zum Empfang eines Steuersignals (St), und einen zweiten Eingang (VCC) zur zuführung einer spannung zur Versorgung der Steuerschaltung, wobei der zweite Eingang (VCC) mit einer Betriebsversorgungsvorrichtung (C2, D2, D3) der Schaltungsanordnung verbunden ist, die ausgelegt ist, im Betrieb des Wechselrichters (Q2, Q3) eine Betriebsversorgungsspannung an den zweiten Eingang (VCC) der Steuerschaltung zu koppeln; wobei die Schaltungsanordnung weiterhin eine Steuerleitung (16) umfasst, die einerseits mit dem Eingang (E1, E2) zum Anschließen einer Versorgungswechselspannung (U_{N}) und andererseits mit dem ersten Eingang (Cntrl) zum Empfang eines Steuersignals gekoppelt ist, wobei in der Steuerleitung (16) ein dritter Schalter (T1) angeordnet ist; wobei die schaltungsanordnung weiterhin eine Anlaufversorgungsvorrichtung (18) mit einem Eingang (E3) und einem Ausgang (A1) umfasst, wobei ihr Eingang (E3) mit dem ersten Eingang (Cntrl) der Steuerschaltung (12) und ihr Ausgang (A1) mit dem zweiten Eingang (VCC) der Steuerschaltung (12) gekoppelt ist;
**gekennzeichnet durch** folgende Schritte:
a) bei unversorgter und damit ausgeschalteter Steuerschaltung: Koppeln eines Ein-Signals am ersten Eingang (E3) der Anlaufversorgungsvorrichtung (18);
b) auf das Ein-Signal am Eingang (E3) der Anlaufversorgungsvorrichtung (18): Erzeugen einer Anlaufversorgungsspannung (U_{VCC}) am Ausgang (A1) der Anlaufversorgungsvorrichtung (18); und
c) Koppeln der Anlaufversorgungsspannung (18) am Ausgang (A1) der Anlaufversorgungsvorrichtung (18) an den zweiten Eingang (VCC) der Steuerschaltung (12).

## Claims

1. Circuit arrangement for the operation of at least one discharge lamp (La) with:
- an input (E1, E2) for connecting an AC supply voltage (U_{N});
- a rectifier (10), which is coupled to the input (E1, E2) and has a first output terminal and a second output terminal for providing a DC supply voltage (U_{ZW});
- an inverter, which comprises at least a first switch (Q2) and a second switch (Q3), which are coupled in series between the first output terminal and the second output terminal of the rectifier (10);
- a control circuit (12) which is at least designed to drive the first switch (Q2) and the second switch (Q3), with
- a first input (Cntrl) for receiving a control signal (St), and
- a second input (VCC) for feeding a voltage for supplying the control circuit, the second input (VCC) being connected to an operational supply apparatus (C2, D2, D3) of the circuit arrangement, which is designed to couple an operational supply voltage to the second input (VCC) of the control circuit during operation of the inverter (Q2, Q3);
- a control line (16), which is coupled firstly to the input (E1; E2) for connecting an AC supply voltage (U_{N}) and secondly to the first input (Cntrl) for receiving a control signal, a third switch (T1) being arranged in the control line (16);
**characterized**
**in that** it furthermore comprises a startup supply apparatus (18) with an input (E3) and an output (A1), its input (E3) being coupled to the first input (Cntrl) of the control circuit (12), and its output (A1) being coupled to the second input (VCC) of the control circuit (12),
the startup supply apparatus (18) being designed to provide a startup supply voltage (U_{VCC}) at the output (A1) of the startup supply apparatus (18) in the event of an on signal at the input (E3) of the startup supply apparatus (18) when the control circuit (12) has no supply and therefore is switched off.

2. Circuit arrangement according to Claim 1,
**characterized**
**in that** the operational supply apparatus comprises a first capacitor (C5), which is coupled to the second input (VCC) of the control circuit (12), the startup supply apparatus (18) being designed to couple the on signal at its input (E3), as startup supply voltage, to the first capacitor (C5) in order to charge the latter.

3. Circuit arrangement according to either of Claims 1 and 2,
**characterized**
**in that** the circuit arrangement comprises a second capacitor (C10), which is coupled between the DC supply voltage (U_{ZW}) and a first terminal for the discharge lamp (La), and a third capacitor (C11), which is coupled between the second terminal for the discharge lamp (La) and the reference potential, the startup supply apparatus (18) being designed to convert the charging current of the third capacitor (C11), which charging current occurs once a discharge lamp (La) has been inserted, into a voltage pulse and to provide this voltage pulse at the output (A1) of the startup supply apparatus (18).

4. Circuit arrangement according to Claim 3,
**characterized**
**in that** the circuit arrangement furthermore has a charging-current amplification apparatus (24), which is designed to amplify the charging current of the third capacitor (C11), the charging-current amplification apparatus (24) being coupled between the DC supply voltage (U_{ZW}) and the reference potential.

5. Circuit arrangement according to either of Claims 3 and 4,
**characterized**
**in that** a nonreactive resistor (R11) is connected in parallel with the third capacitor (C11).

6. Circuit arrangement according to Claim 1,
**characterized**
**in that** the startup supply apparatus (18) comprises a coupling apparatus (Q4, Q5, R12, R13), which is arranged in such a way that the second input (VCC) of the control circuit (12) can be coupled to the DC supply voltage (U_{ZW}) via the coupling apparatus (Q4, Q5, R12, R13), the coupling apparatus (Q4, Q5, R12, R13) having a control input, which is coupled to the input (E3) of the startup supply apparatus.

7. Circuit arrangement according to Claim 6,
**characterized**
**in that** the coupling apparatus comprises a fourth and a fifth switch (Q5, Q4) and at least one nonreactive resistor (R13), which are arranged in such a way that, by driving of the fourth switch (Q5) with the signal at the input (E3) of the startup supply apparatus (18), a current flow through the nonreactive resistor (R13) is made possible, with the voltage drop produced thereby across the nonreactive resistor (R13) being coupled to the control path of the fifth switch (Q4), in order to switch the fifth switch (Q4) into the on state, as a result of which the fifth switch (Q4), which is coupled to the DC supply voltage (U_{ZW}), applies the DC supply voltage (U_{ZW}) to the output (A1) of the startup supply apparatus (18).

8. Circuit arrangement according to either of Claims 6 and 7,
**characterized**
**in that** the first input (Cntrl) of the control circuit (12) is coupled, through the control circuit, to the input (E3) of the startup supply apparatus (18).

9. Circuit arrangement according to one of the preceding claims,
**characterized**
**in that** the third switch is in the form of a pushbutton (T1).

10. Method for the operation of at least one discharge lamp (La) using a circuit arrangement with an input (E1, E2) for connecting an AC supply voltage (U_{N}); a rectifier (10), which is coupled to the input (E1, E2) and has a first output terminal and a second output terminal for providing a DC supply voltage (U_{ZW}); an inverter, which comprises at least a first switch (Q2) and a second switch (Q3), which are coupled in series between the first output terminal and the second output terminal of the rectifier (10); a control circuit (12) which is at least designed to drive the first switch (Q2) and the second switch (Q3), the control circuit having a first input (Cntrl) for receiving a control signal (St), and a second input (VCC) for feeding a voltage for supplying the control circuit, the second input (VCC) being connected to an operational supply apparatus (C2, D2, D3) of the circuit arrangement, which is designed to couple an operational supply voltage to the second input (VCC) of the control circuit during operation of the inverter (Q2, Q3); the circuit arrangement furthermore comprising a control line (16), which is coupled firstly to the input (E1, E2) for connecting an AC supply voltage (U_{N}) and secondly to the first input (Cntrl) for receiving a control signal, a third switch (T1) being arranged in the control line (16); the circuit arrangement furthermore comprising a startup supply apparatus (18) with an input (E3) and an output (A1), its input (E3) being coupled to the first input (Cntrl) of the control circuit (12), and its output (A1) being coupled to the second input (VCC) of the control circuit (12);
**characterized by** the following steps:
a) when the control circuit has no supply and therefore is switched off: Coupling an on signal at the first input (E3) of the startup supply apparatus (18);
b) in the event of the on signal at the input (E3) of the startup supply apparatus (18): Production of a startup supply voltage (U_{VCC}) at the input (A1) of the startup supply apparatus (18); and
c) coupling of the startup supply voltage (U_{VCC}) at the output (A1) of the startup supply apparatus (18) to the second input (VCC) of the control circuit (12).

## Revendications

1. Circuit permettant de faire fonctionner au moins une lampe à décharge (La) comprenant :
- une entrée (E1, E2) pour le raccordement d'une tension alternative d'alimentation (U_{N}) ;
- un redresseur (10), qui est couplé à l'entrée (E1, E2) et présente une première et une deuxième borne de sortie pour la mise à disposition d'une tension continue d'alimentation (U_{ZW}) ;
- un onduleur, qui comprend un premier (Q2) et un deuxième commutateur (Q3), qui sont couplés en série entre la première et la deuxième borne de sortie du redresseur (10) ;
- un circuit de commande (12), qui est conçu pour commander le premier (Q2) et le deuxième (Q3) commutateur, avec
- une première entrée (Cntrl) pour la réception d'un signal de commande (St), et
- une deuxième entrée (VCC) pour amener une tension à alimenter le circuit de commande, la deuxième entrée (VCC) étant reliée à un dispositif d'alimentation de fonctionnement (C2, D2, D3) du circuit, qui est conçu pour coupler pendant le fonctionnement de l'onduleur (Q2, Q3) une tension d'alimentation de fonctionnement à la deuxième entrée (VCC) du circuit ;
- une ligne de commande (16), qui est couplée d'une part à l'entrée (E1 ; E2) pour le raccordement d'une tension alternative d'alimentation (U_{N}) et d'autre part à la première entrée (Cntrl) pour la réception d'un signal de commande, un troisième commutateur (T1) étant disposé dans la ligne de commande (16) ;
**caractérisé en ce**
**qu'**il comprend en outre un dispositif d'alimentation de mise en marche (18) avec une entrée (E3) et une sortie (A1), son entrée (E3) étant couplée à la première entrée (Cntrl) du circuit de commande (12) et sa sortie (A1) à la deuxième entrée (VCC) du circuit de commande (12) ; le dispositif d'alimentation de mise en marche (18) étant conçu, lorsque le circuit de commande (12) n'est pas alimenté et est donc déconnecté, pour la mise à disposition d'une tension d'alimentation de mise en marche (U_{VCC}) au niveau de la sortie (A1) du dispositif d'alimentation de mise en marche (18) sur un signal de mise sous tension au niveau de l'entrée (E3) du dispositif d'alimentation de mise en marche (18).

2. Circuit selon la revendication 1
**caractérisé en ce**
**que** le dispositif d'alimentation de fonctionnement comprend un premier condensateur (C5), qui est couplé à la deuxième entrée (VCC) du circuit de commande (12), le dispositif d'alimentation de mis en marche (18) étant conçu pour coupler le signal de mise sous tension au niveau de son entrée (E3) en tant que tension d'alimentation de mise en marche au premier condensateur (C5), pour le charger.

3. Circuit selon l'une des revendications 1 ou 2,
**caractérisé en ce**
**que** le circuit comprend un deuxième condensateur (C10), qui est couplé entre la tension continue d'alimentation (U_{ZW}) et une première borne pour la lampe à décharge (La), et un troisième condensateur (C11), qui est couplé entre la deuxième borne pour la lampe à décharge (La) et le potentiel de référence, le dispositif d'alimentation de mise en marche (18) étant conçu pour la transformation du courant de charge du troisième condensateur (C11) apparaissant après la mise en marche d'une lampe à décharge (La) en une impulsion de tension et la mise à disposition de cette impulsion de tension au niveau de la sortie (A1) du dispositif d'alimentation de mise en marche (18).

4. Circuit selon la revendication 3,
**caractérisé en ce**
**que** le circuit présente en outre un dispositif de renforcement de courant de charge (24), qui est conçu pour renforcer le courant de charge du troisième condensateur (C11), le dispositif de renforcement de courant de charge (24) étant couplé entre la tension continue d'alimentation (U_{ZW}) et le potentiel de référence.

5. Circuit selon l'une des revendications 3 ou 4,
**caractérisé en ce**
**qu'**une résistance ohmique (R11) est connectée en parallèle au troisième condensateur (C11).

6. Circuit selon la revendication 1,
**caractérisé en ce**
**que** le dispositif d'alimentation de mise en marche (18) comprend un dispositif de couplage (Q4, Q5, R12, R13), qui est disposé de telle sorte que la deuxième entrée (VCC) du circuit de commande (12) peut être couplée via le dispositif de couplage (Q4, Q5, R12, R13) à la tension continue d'alimentation (U_{ZW}), le dispositif de couplage (Q4, Q5, R12, R13) présentant une entrée de commande qui est couplée à l'entrée (E3) du dispositif d'alimentation de mise en marche.

7. Circuit selon la revendication 6,
**caractérisé en ce**
**que** le dispositif de couplage comprend un quatrième et un cinquième commutateur (Q5, Q4) et au moins une résistance ohmique (R13), qui sont disposés de telle sorte que par la commande du quatrième commutateur (Q5) avec le signal au niveau de l'entrée(E3) du dispositif d'alimentation de mise en marche (18) un flux de courant est rendu possible par le biais de la résistance ohmique (R13), la chute de tension générée ainsi au niveau de la résistance ohmique (R13) étant couplée au trajet de commande du cinquième commutateur (Q4), afin de rendre conducteur le cinquième commutateur (Q4), moyennant quoi le cinquième commutateur (Q4), qui est couplé à la tension continue d'alimentation (U_{ZW}), applique la tension continue d'alimentation (U_{ZW}) à la sortie (A1) du dispositif d'alimentation de mise en marche (18).

8. Circuit selon l'une des revendications 6 ou 7,
**caractérisé en ce**
**que** la première entrée (Cntrl) du circuit (12) est couplée au travers du circuit de commande à l'entrée (E3) du dispositif d'alimentation de mise en marche (18).

9. Circuit selon l'une des revendications précédentes,
**caractérisé en ce**
**que** le troisième commutateur est configuré en tant que bouton-poussoir (T1).

10. Procédé permettant de faire fonctionner au moins une lampe à décharge (La) au niveau d'un circuit comprenant une entrée (E1, E2) pour le raccordement d'une tension alternative d'alimentation (U_{N}) ; un redresseur (10), qui est couplé à l'entrée (E1, E2) et présente une première et une deuxième borne de sortie pour la mise à disposition d'une tension continue d'alimentation (U_{ZW}) ; un onduleur, qui comprend au moins un premier (Q2) et un deuxième commutateur (Q3), qui sont couplés en série entre la première et la deuxième borne de sortie du redresseur (10) ; un circuit de commande (12), qui est conçu au moins pour commander le premier (Q2) et le deuxième commutateur (Q3), le circuit de commande présentant une première entrée (Cntrl) pour la réception d'un signal de commande (St), et une deuxième entrée (VCC) pour amener une tension à alimenter le circuit de commande, la deuxième entrée (VCC) étant reliée à un dispositif d'alimentation de fonctionnement (C2, D2, D3) du circuit, qui est conçu pour coupler pendant le fonctionnement de l'onduleur (Q2, Q3) une tension d'alimentation de fonctionnement à la deuxième entrée (VCC) du circuit de commande ; le circuit comprenant en outre une ligne de commande (16), qui est couplée d'une part à l'entrée (E1, E2) pour le raccordement d'une tension alternative d'alimentation (U_{N}) et d'autre part à la première entrée (Cntrl) pour la réception d'un signal de commande, un troisième commutateur (T1) étant disposé dans la ligne de commande (16) ; le circuit comprenant en outre un dispositif d'alimentation de mise en marche (18) avec une entrée (E3) et une sortie (A1), son entrée (E3) étant couplée à la première entrée (Cntrl) du circuit de commande (12) et sa sortie (A1) à la deuxième entrée (VCC) du circuit de commande (12) ;
**caractérisé par** les étapes suivantes :
a) lorsque le circuit de commande n'est pas alimenté et est donc déconnecté : couplage d'un signal de mise sous tension au niveau de la première entrée (E3) du dispositif d'alimentation de mise en marche (18) ;
b) sur le signal de mise sous tension au niveau de l'entrée (E3) du dispositif d'alimentation de mise en marche (18) : génération d'une tension d'alimentation de mise en marche (U_{VCC}) au niveau de la sortie (A1) du dispositif d'alimentation de mise en marche (18) ; et
c) couplage du dispositif d'alimentation de mise en marche (18) au niveau de la sortie (A1) du dispositif d'alimentation de mise en marche (18) à la deuxième entrée (VCC) du circuit de commande (12).
